# FASCICULE DE BREVET EUROPEEN

(11) **EP 4 574 485 B1**
(45) Date de publication et mention de la délivrance du brevet: **16.09.2026**
(21) Numéro de dépôt: 24222466.5
(22) Date de dépôt: 20.12.2024
(51) Int. Cl.: B60J 5/04, B60J 5/06

(54) **AGENCEMENT D'UN VÉHICULE COMPORTANT UNE PORTE À GALANDAGE ET UN DISPOSITIF DE RETENUE**
ANORDNUNG EINES FAHRZEUGS MIT EINER GALLERTÜR UND EINER HALTEVORRICHTUNG
ARRANGEMENT OF A VEHICLE COMPRISING A WIRE-ENCLOSED DOOR AND A RETAINING DEVICE

(30) Priorité: 21.12.2023 FR 2314838
(43) Date de publication de la demande: 25.06.2025
(73) Titulaire: FLEXIS, 92100 Boulogne-Billancourt (FR)
(72) Inventeur: ROLAND, Olivier, 78640 VILLIERS SAINT-FREDERIC (FR)
(74) Mandataire: Lavoix

(56) Documents cités:
- DE-A1- 2 011 151
- JP-A- 2014 020 015
- US-A- 1 000 551

## Description

L'invention concerne un agencement d'un véhicule comportant une porte coulissante à galandage et un dispositif de retenue. L'invention concerne également un véhicule automobile comprenant un tel agencement.

Certains véhicules automobiles sont équipés de portes arrière coulissantes qui permettent d'obstruer ou de libérer l'accès à l'habitacle et/ou une zone de chargement du véhicule automobile qu'elles équipent. Pour chaque porte coulissante, un dispositif de retenue, couramment appelé « pion de retenue choc » est généralement fixé sur la caisse du véhicule automobile, par exemple au niveau du pied B, afin de retenir au besoin la partie avant de la porte arrière coulissante. Un tel « pion de retenue choc » est par exemple décrit dans la demande de brevet DE 10 2007 051 718 A1.

Un dispositif de retenue sert à maintenir la porte arrière coulissante dans sa position fermée, il empêche ainsi l'ouverture de la porte arrière coulissante dans le cas d'un mouvement relatif transversal de ladite porte par rapport à la caisse, vers l'intérieur et/ou l'extérieur. Un dispositif de retenue connu de l'état de l'art s'apparente généralement à une pièce mâle portée par la caisse du véhicule automobile, cette pièce mâle est alors configurée pour être insérée dans un logement femelle tel qu'un trou aménagé dans le caisson de la porte latérale arrière coulissante, au niveau d'une partie avant de la porte arrière.

Ainsi, dans le cas d'un déplacement forcé transversal de la porte arrière coulissante vers l'extérieur lors d'un choc, le dispositif de retenue vient en butée contre la paroi délimitant un logement aménagé dans le caisson de porte arrière latérale coulissante de façon à lier mécaniquement cette dernière à la caisse du véhicule, évitant de la sorte une ouverture de la porte vers l'extérieur.

Ainsi, selon les solutions connus dans l'état de la technique actuel, le maintien de la porte coulissante arrière dans sa position fermée est assuré par un pion de retenue dont la positionnement sur la caisse est fortement conditionné à la cinématique de déplacement normal de la porte, notamment en fin de parcours de fermeture. Bien souvent de telles cinématique de déplacement de l'ouvrant est complexe, en ce sens qu'elle combine simultanément des mouvements concomitant de déplacement de l'avant de la porte arrière coulissante selon des axes longitudinaux et transversaux. Le positionnement du pion de retenue à intégrer à la caisse est d'autant plus complexe à réaliser que la cinématique de déplacement de la porte s'oriente de manière inclinée par l'avant et l'intérieur du véhicule.

Le document US1,000,551A divulgue une porte coulissante à galandage extérieur.

Le but de l'invention est de proposer une alternative aux solutions connues et proposant une solution plus simple pour une porte avant de service pour un véhicule de type utilitaire.

A cet effet, l'invention porte sur un agencement d'un véhicule automobile, notamment d'un côté du véhicule, comportant une caisse et une porte coulissante à galandage, notamment à galandage extérieur, la porte coulissante étant configurée pour être déplacée de manière rectiligne le long d'un côté de caisse, entre une position fermée dans laquelle la porte coulissante obture un accès vers l'intérieur d'un habitacle et/ou d'une zone de chargement du véhicule, et une position ouverte dans laquelle la porte coulissante laisse libre l'accès vers l'intérieur dudit habitacle et/ou de ladite zone de chargement du véhicule, l'agencement étant caractérisé en ce que la porte coulissante comprend une ouverture rectiligne longitudinale, notamment du type d'une saignée ou d'une rainure, ménagée dans la porte coulissante, notamment au niveau d'une paroi de fond de caisson de la porte coulissante, et en ce que l'agencement comprend au moins un dispositif de retenue destiné à maintenir ladite porte coulissante dans sa position fermée, notamment dans le cas d'un choc exercé latéralement contre la porte coulissante, notamment de l'intérieur vers l'extérieur du véhicule, le dispositif de retenue étant destiné à évoluer librement à l'intérieur de l'ouverture rectiligne longitudinale lors du coulissement de la porte.

Selon l'invention, l'agencement peut comprendre les caractérisés suivantes, prises séparément ou en combinaison entre elles :
- le dispositif de retenue est fixé à un pied avant d'un côté de caisse, notamment au niveau d'un bord arrière d'un pied avant destiné à être disposé en vis-à-vis d'un bord avant de la porte coulissante en position fermée ;
- le dispositif de retenue est fixé à un pied milieu d'un côté de caisse, notamment au niveau d'un bord avant du pied milieu s'étendant de manière sensiblement perpendiculaire, notamment transversal, à la paroi intérieure de la porte coulissante ;
- la porte coulissante, notamment une paroi extérieure de la porte avant, en position fermée est affleurante du pied avant, notamment d'une paroi extérieure du pied avant ;
- le dispositif de retenue comprend un doigt saillant hors du côté de caisse du véhicule, notamment hors du bord arrière du pied avant, ledit doigt comportant une tige principale s'étendant longitudinalement au véhicule dont une extrémité libre comprend une tête, notamment en forme de crochet ou de disque, le dispositif de retenue étant espacé de la porte, notamment du bord avant de la porte coulissante, de telle sorte qu'elle puisse circuler librement entre les positions ouverte et fermée sans entrer en contact avec le dispositif de retenue ;
- la paroi de fond du caisson de la porte coulissante s'étend en vis-à-vis d'un bord extérieur du pied milieu quelle que soit la position de la porte coulissante ;
- le dispositif de retenue comprend un doigt transversalement saillant hors du côté de caisse du véhicule, ledit doigt comportant une tige principale s'étendant transversalement et longitudinalement au véhicule, dont une extrémité libre d'orientation longitudinale comprend une tête, notamment en forme de crochet ou de disque ;
- ledit doigt comporte une platine de fixation au côté de caisse, notamment une platine de fixation vissée sur la face arrière du pied avant ou sur la face avant du pied milieu ;
- le dispositif de retenue est destiné à venir en contact avec la porte coulissante afin de la maintenir en position fermée sur le côté de caisse lors d'un choc latéral ;
- le dispositif de retenue est espacé de la porte coulissante, notamment espacé des bords de l'ouverture longitudinale et/ou d'un passage ménagé au niveau d'une paroi transversale, le dispositif de retenue étant destinée à venir en relation mécanique contre la porte en position fermée lors d'un choc, notamment contre la paroi transversale du caisson, la paroi étant notamment une pièce de renfort rapportée sur contre la paroi de fond du caisson ;
- l'agencement comprend un élément déformable de masquage dudit logement longitudinal, notamment un élément du type d'un joint à lèvres, traversé par le dispositif de retenue de manière à écarter notamment les lèvres.

L'invention a aussi trait à un véhicule automobile comprenant un agencement ayant en tout ou partie les caractéristiques susmentionnées.

Ces objets, caractéristiques et avantages de la présente invention seront exposés en détail dans la description suivante d'un mode de réalisation particulier fait à titre non-limitatif en relation avec les figures jointes parmi lesquelles :
La [Fig.1] illustre de manière schématique une section d'axe vertical d'un agencement d'une caisse de véhicule automobile comportant une porte coulissante à galandage et un dispositif de retenue, la porte étant en position fermée, selon l'invention.
La [Fig.2] illustre schématiquement une variante de réalisation d'un agencement de la figure 1, la porte étant en position fermée, selon l'invention.
La [Fig.3] représente l'agencement de la figure 2 avec la porte coulissante en position d'ouverture, selon l'invention.
La [Fig.4] est une vue en coupe d'axe A-A de la figure 1, selon l'invention.

Un trièdre avec trois axes X, Y, Z est illustré sur certaines figures. Dans ce document, l'axe X désigne l'axe longitudinal du véhicule automobile. En marche avant et en ligne droite, le véhicule progresse de l'arrière vers l'avant, selon une direction parallèle à son axe longitudinal. L'axe X est orienté de l'avant vers l'arrière du véhicule, c'est-à-dire dans le sens de la marche arrière. L'axe Y désigne l'axe transversal du véhicule. L'axe Z désigne l'axe perpendiculaire à l'axe X et à l'axe Y. On considère que le véhicule repose sur un sol horizontal. L'axe Z est un axe vertical, orienté de bas en haut. Les axes X, Y et Z forment un repère orthogonal.

Il existe plusieurs types d'agencement 2 de caisse comportant une porte coulissante pour véhicule automobile. De manière générale, l'on distingue les portes coulissantes dites « classiques » des portes coulissantes 4 dites « à galandage ».

Une porte coulissante de véhicule automobile est dite « classique » lorsque le déplacement de la porte coulissante de sa position fermée vers sa position ouverte ou inversement implique un déplacement latéral de la porte vers l'extérieur du véhicule. Autrement dit, dans un agencement de porte coulissante « classique », le mouvement de ladite porte coulissante n'est pas une translation rectiligne suivant un seul et même axe de déplacement, notamment le long d'un axe longitudinal pour une porte latérale coulissante, mais un déplacement suivants deux directions perpendiculaires entre elles, notamment suivant la direction latérale Y et suivant la direction longitudinale X.

Une porte coulissante 4 de véhicule automobile est dite « à galandage » lorsque la porte coulissante 4 n'est pas déplacée latéralement vers l'extérieur pendant ses mouvements entre ses positions d'ouverte et de fermeture. Autrement dit, dans un agencement 2 de caisse d'un véhicule comportant une porte coulissante 4 à galandage pour un véhicule automobile, la porte coulissante 4 est déplaçable en translation rectiligne entre ses positions d'ouverture et de fermeture suivant une unique direction, parallèlement à l'axe X du véhicule automobile.

L'on distingue par ailleurs deux sous-catégories d'agencements 2 de caisse comportant une porte coulissante 4 à galandage, à savoir la porte coulissante 4 à galandage intérieur et la porte coulissante 4 à galandage extérieur.

Dans le cas des portes coulissantes 4 à galandage intérieur, la porte coulissante 4 coulisse le long du côté intérieur d'une caisse 6 du véhicule automobile. Ainsi, lorsque la porte coulissante 4 est dans sa position ouverte, ladite porte coulissante 4 se situe derrière un pied de caisse du véhicule automobile, à l'intérieur de l'habitacle 8 ou d'une zone de chargement dudit véhicule automobile.

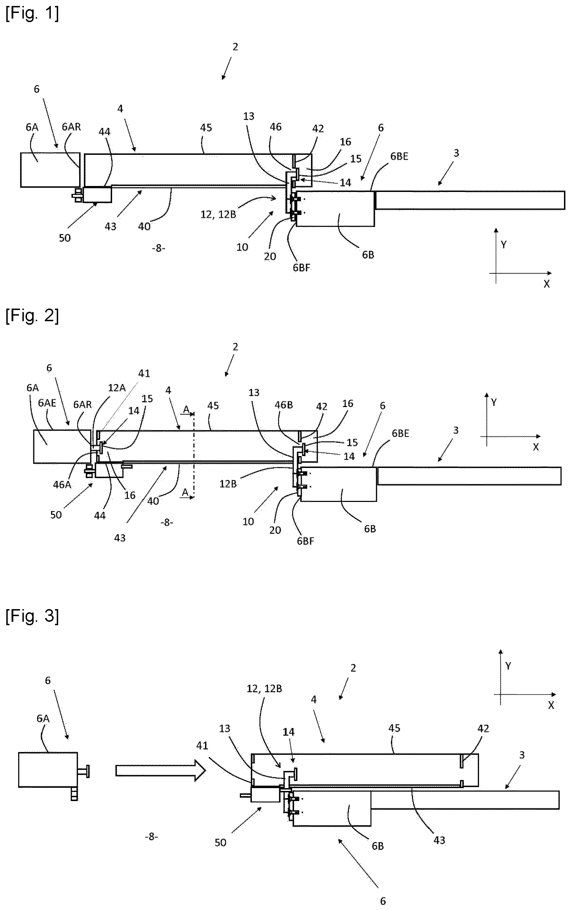

Dans le cas des portes coulissantes 4 à galandage extérieur, la porte coulissante 4 coulisse le long du côté 3 extérieur de la caisse 6 du véhicule automobile, soit devant le pied de caisse vu de l'extérieur, de sorte qu'elle est continuellement rendue visible. Ainsi, ladite porte coulissante 4 se situe du côté 3 extérieur et en dehors de l'habitacle 8 dudit véhicule automobile aussi bien dans sa position ouverte que dans sa position fermée, comme cela est rendu visible sur les [Fig.1], [Fig.2] et [Fig.3].

Dans un tel agencement 2, il est possible de concevoir un dispositif de retenue 10 qui permet de maintenir la porte coulissante 4 à galandage extérieur dans sa position fermée, notamment dans le cas d'un choc exercé latéralement contre la porte coulissante 4. Un tel choc exerce un effort contre la porte coulissante orientée soit vers l'intérieur ou vers l'extérieur de la porte, de telle sorte que le dispositif de retenue est respectivement apte à soit empêcher l'intrusion de la porte dans la zone habitacle ou de chargement, soit maintenir l'ouverture de caisse en l'état fermé par la porte.

Les [Fig.1], [Fig.2] et [Fig.3] illustrent schématiquement des vues en coupe d'un agencement 2 d'un côté 3 latéral d'un véhicule automobile comportant une porte coulissante 4 à galandage extérieur et un dispositif de retenue 12, 12A et 12B. Sur la [Fig.1], la porte coulissante 4 est représentée dans sa position fermée. Il s'agit d'une porte de service qui en position fermée s'étend transversalement au droit du siège conducteur ou de la rangée de sièges parmi lesquels se trouve le siège conducteur. Dans cette position fermée, la porte coulissante 4 obstrue un accès vers l'intérieur d'un habitacle 8 et/ou d'un compartiment de chargement du véhicule automobile. L'ouverture de caisse 6 qui est destinée à être fermée par la porte coulissante 4 est délimitée pour partie par le pied avant 6A et le pied milieu 6B. En position de fermeture, le bord avant de la porte 4 est disposé au prolongement du pied avant 6A, en ce sens que la paroi arrière 6AR du pied avant 6A est disposée en vis-à-vis du bord avant de la porte 4, tandis que le bord arrière de la porte 4 est disposé à recouvrement par l'extérieur du pied milieu 6B, la paroi intérieure de la porte 5 étant en partie disposée à recouvrement de la paroi extérieure 6BE du pied milieu 6B. Le pied milieu 6B est transversalement décalé vers l'intérieur par rapport au pied avant 6A, de telle sorte que le décalage en Y est sensiblement lié à l'épaisseur de la porte coulissante 4.

Ainsi, le dispositif de retenue 10 comprend une tige protubérante 12 portée par un côté 3 de la caisse 6 du véhicule automobile. Plus précisément, la tige protubérante 12 fait saillie depuis un pied milieu de ladite caisse 6 de véhicule, communément nommé pied B0. La tige protubérante 12 comprend une extrémité libre 14 qui présente une forme en disque. Selon une variante de réalisation non représentée, il pourrait s'agit d'une extrémité libre 14 présentant une forme en crochet. Cette extrémité libre 14 est configurée pour maintenir la porte coulissante 4 dans sa position fermée, notamment dans le cas d'un choc exercé latéralement contre ladite porte coulissante 4.

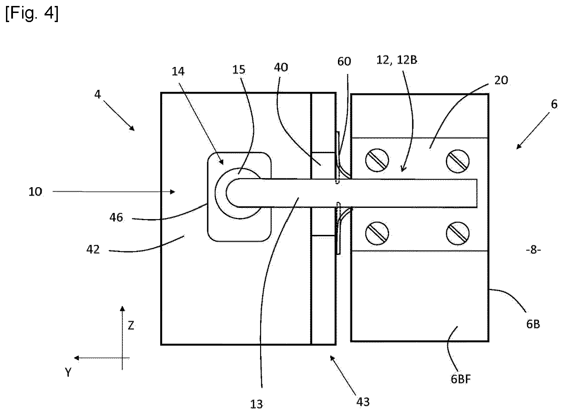

Dans le mode de réalisation spécifique illustré sur la [Fig.1], l'extrémité libre 14 coopère avec un logement 16 aménagé dans la porte coulissante 4 de manière à maintenir ladite porte 4 dans sa position fermée. Ce logement 16 peut être délimité par un caisson 43 de porte 4, ledit caisson comportant une paroi de fond, dont la face intérieure est destinée à venir au regard du pied milieu 6A, comme cela est illustré sur la [Fig.3]. Le logement 16 peut être délimité par au moins une cloison transversale 42, qui s'étend verticalement dans la porte 4. La portion de la tige protubérante 12 qui s'étend le long de l'axe X traverse la cloison transversale 42 par une ouverture 46 dédiée, qui est à minima de section sensiblement complémentaire à celle de l'extrémité libre 14, au jeu de coulissement prés. La [Fig.4] représente un mode de réalisation particulier qui sera décrit en détail par la suite.

Le caisson 43 de porte 4 comporte une ouverture longitudinale 40 qui évolue depuis le logement 16 arrière vers la partie avant de la porte 4. La dimension de l'ouverture 40 est rectiligne d'axe X est supérieure à la course d'ouverture de la porte de telle sorte que le dispositif de retenue 10 s'étendant au travers de l'ouverture 40 selon une direction d'axe Y puisse évoluer librement lorsque la porte 4 est déplacée entre ses positions d'ouverture et de fermeture. La hauteur de l'ouverture 40 est supérieure à celle de la tige protubérante 12 de telle sorte que l'extrémité libre 14 puisse évoluer au travers de l'ouverture rectiligne 40 lors du montage du dispositif de retenue 10 sur le côté 3 de caisse 6.

L'ouverture rectiligne 40 peut être une saignée ou une rainure pratiquée au niveau de la paroi de fond du caisson 43.

Selon un mode de réalisation spécifique du dispositif de retenue 10, il s'agit d'une unique pièce monobloc, ce qui permet de le rendre plus robuste. Dans ce mode de réalisation, la tige protubérante 12 présente une section droite de forme sensiblement carrée. De manière plus générale, la tige protubérante 12 peut présenter une section droite de forme polygonale. Au niveau de la jonction entre la tige protubérante 12 et son extrémité libre 14, un bloc de liaison en forme de prisme à base triangulaire peut être présent afin de renforcer la jonction entre la tige protubérante 12 et son extrémité libre 14.

Selon un mode de réalisation spécifique du dispositif de retenue 10, une platine de fixation 20 est rendue solidaire de la tige protubérante 12 notamment par soudage. Sur la [Fig.4] une telle platine de fixation 20 est représentée avec des moyens de vissage permettant un assemblage sur le pied milieu 6B, plus particulièrement sur la paroi avant 6BF.

Selon une architecture particulière de l'agencement 2, la paroi avant 6BF du pied milieu 6B s'étend transversalement au prolongement de la cloison transversale 42 de la porte 4 en position de fermeture. Une telle particularité de conception vise à répartir l'effort d'un choc extérieur appliqué à la porte 4 directement sur une zone fortement structurante du pied milieu 6B.

La partie avant de la porte 4 peut comprendre un dispositif de verrouillage 50 assurant le verrouillage de la porte sur le pied avant 6A.

Selon la variante de réalisation de la [Fig.2], le dispositif de retenue 10 comprend un autre doigt protubérant 12A porté par le pied avant 6A. En l'espèce, ledit autre doigt protubérant 12A est disposé en saillie hors de la paroi arrière 6AR du pied avant 6A. Il peut être disposé verticalement au même niveau que le doigt protubérant 12B du pied milieu 6B. La porte coulissante 4 comprend un bord d'extrémité avant dans lequel est ménagé une ouverture 46A au travers de laquelle ledit autre doigt protubérant 12A est apte à s'étendre lorsque la porte est en position de fermeture. L'ouverture 46A ménagée au niveau du bord avant de porte 4 peut alors être sensiblement coaxial à l'ouverture 46B ménagée au niveau de la cloison transversale 42. Une telle architecture à double doigts de retenue permet de répartir les efforts latéraux d'un choc appliqué à la porte entre les pieds avant 6A et milieu 6B. Le dimensionnement de chacune des tiges protubérantes 12A, 12B peut être réduit, comparativement au mode de réalisation de la [Fig.1] dont le dispositif de retenue 10 comprend un unique doigt protubérant 12 au niveau du pied milieu 6B.

Sur la [Fig.3], la porte coulissante 4 de la [Fig.2] est représentée dans sa position ouverte. Dans cette position ouverte, la porte coulissante 4 libère l'accès vers l'intérieur du véhicule. Une flèche indique le sens de déplacement suivi par la porte coulissante 4 lorsqu'elle est déplacée depuis sa position fermée vers sa position ouverte.

Dans tous les modes de réalisation envisageables pour le dispositif de retenue 10, celui-ci comporte une tige protubérante 12 avec une extrémité libre 14 qui présente une forme en disque ou en crochet, configurée pour maintenir ladite porte dans sa position fermée.

Dans le mode de réalisation illustré sur la [Fig.3], la tige protubérante 12B portée par la caisse 6, plus particulièrement par le pied milieu 6B du véhicule, est hors du logement 16 localisé en partie arrière de porte. La tige protubérante 12B est alors disposée à proximité de l'extrémité avant de l'ouverture rectiligne 40 de porte 4, qui jouxte le dispositif de verrouillage 50. Cette dernière pourrait, selon un mode de réalisation, comprendre un pêne qui serait apte à venir en prise avec la tige protubérante 12B, celle-ci assurerait alors le rôle d'une gâche de pied milieu. Dans ce cas, le dispositif de retenue 10 est pour partie confondu avec un dispositif de verrouillage 50 de la porte coulissante 4 en configuration ouverte.

Ainsi, le dispositif de retenue 10 permet d'une part de maintenir la porte coulissante 4 dans sa position fermée, et d'autre part participer le dispositif de verrouillage 50 au maintien de la porte coulissante 4 dans sa position ouverte.

La [Fig.4] est un agrandissement de l'agencement de la [Fig.1] selon la coupe A-A, la porte coulissante 4 étant représentée dans sa position fermée. Dans cette position fermée, la porte coulissante 4 obstrue un accès vers l'intérieur du véhicule de telle sorte que le dispositif de retenue 10 s'étend via la tige protubérante 12 au travers de l'ouverture rectiligne 40, et par son extrémité 14 à l'intérieur du logement 16. Selon le mode de réalisation illustré sur la [Fig.4], l'ouverture 46 pratiquée au niveau de la cloison 42 est sensiblement de section rectangulaire, tandis que l'extrémité 14 présente un profil circulaire. La cloison 42 relie le fond du caisson 43 au panneau extérieur non représenté, au moins dans une zone de la porte 4 située au regard du dispositif de retenue 10. L'ouverture rectiligne 40 est occultée par un moyen de masquage 60 assemblé contre la face extérieure du fond de caisson 43. Ledit moyen de masquage 60 est déformable, il peut être réalisé à partir d'une matière plastique, tel que du caoutchouc. Ledit moyen de masquage 60 peut comprendre deux lèvres opposées verticalement l'une au regard de l'autre. Selon une variante de réalisation non représentée, ledit moyen de masquage pourrait être du type d'un peigne dont les dents s'étendent verticalement. Le moyen de masquage 60 est de préférence ouvert au niveau de la tige protubérante 12 et fermé à distance de la tige, comme cela est représenté en traits pointillés. Avantageusement un tel moyen de masquage 60 contribue à l'étanchéité de la porte 4, de sorte qu'il pourrait aussi être qualifié de moyen d'étanchéité.

Selon un exemple, le dispositif de retenue 10 comprend un matériau métallique. Ce matériau métallique peut par exemple comprendre de l'aluminium. Le dispositif de retenue 10 peut notamment être fabriqué avec un procédé de moulage.

Il est ainsi possible de concevoir, dans le cas d'un agencement 2 de caisse de véhicule automobile comportant une porte coulissante 4 à galandage extérieur, un dispositif de retenue 10 qui est apte à évoluer à l'intérieur d'une ouverture rectiligne 40 lors du déplacement de la porte. Une telle conception permet de limiter l'épaisseur de la porte 4 qui évolue à l'extérieur du véhicule, ce qui contribue à augmenter le volume utile dans l'habitacle ou la zone de chargement 8 accessible à l'extérieur par un ouverture de caisse 6 que la porte 4 est destinée à fermer.

En outre, le dispositif de retenue 10 dont la fonction première est de maintenir la porte 4 sur la caisse 6 à en cas de choc latéral susceptible de provoquer un déplacement relatif entre la porte coulissante 4 fermée et la caisse 6, est également apte à participer au verrouillage de la porte 4 en position ouverte. En outre, l'agencement 2 de caisse est remarquable en ce que le dispositif de retenue 10 est implanté de façon discrète, et l'ouverture rectiligne 40 peut être avantageusement masquée de manière étanche.

## Revendications

1. Agencement (2) d'un véhicule automobile, notamment d'un côté (3) du véhicule, comportant une caisse (6) et une porte coulissante (4) à galandage, notamment à galandage extérieur, la porte coulissante (4) étant configurée pour être déplacée de manière rectiligne le long d'un côté (3) de caisse, entre une position fermée dans laquelle la porte coulissante (4) obture un accès vers l'intérieur d'un habitacle (8) et/ou d'une zone de chargement du véhicule, et une position ouverte dans laquelle la porte coulissante (4) laisse libre l'accès vers l'intérieur dudit habitacle (8) et/ou de ladite zone de chargement du véhicule, l'agencement (2) étant **caractérisé en ce que** la porte coulissante (4) comprend une ouverture rectiligne longitudinale (40), notamment du type d'une saignée ou d'une rainure, ménagée dans la porte coulissante, notamment au niveau d'une paroi de fond (44) de caisson (43) de la porte coulissante, et **en ce que** l'agencement comprend au moins un dispositif de retenue (10) destiné à maintenir ladite porte coulissante (4) dans sa position fermée, notamment dans le cas d'un choc exercé latéralement contre la porte coulissante (4), notamment de l'intérieur vers l'extérieur du véhicule, le dispositif de retenue (10) étant destiné à évoluer librement à l'intérieur de l'ouverture rectiligne longitudinale (40) lors du coulissement de la porte.

2. Agencement (2) selon la revendication précédente, **caractérisé en ce que** le dispositif de retenue (12A) est fixé à un pied avant (6A) d'un côté (3) de caisse (6), notamment au niveau d'un bord arrière (6AR) d'un pied avant (6A) destiné à être disposé en vis-à-vis d'un bord avant (4F) de la porte coulissante (4) en position fermée.

3. Agencement (2) selon la revendication 1 ou 2, **caractérisé en ce que** le dispositif de retenue (12, 12B) est fixé à un pied milieu (6B) d'un côté (3) de caisse (6), notamment au niveau d'un bord avant (6BF) du pied milieu s'étendant de manière sensiblement perpendiculaire, notamment transversal, à la paroi intérieure (43) de la porte coulissante (4).

4. Agencement (2) selon la revendication 2 ou 3, **caractérisé en ce que la** porte coulissante (4), notamment une paroi extérieure (45) de la porte avant (4), en position fermée est affleurante du pied avant (6A), notamment d'une paroi (6AE) extérieure du pied avant (6A).

5. Agencement (2) selon la revendication précédente, **caractérisé en ce que** le dispositif de retenue (12A) comprend un doigt (13) saillant hors du côté (3) de caisse (6) du véhicule, notamment hors du bord arrière (6AR) du pied avant (6A), ledit doigt (13) comportant une tige principale s'étendant longitudinalement au véhicule dont une extrémité libre (14) comprend une tête, notamment en forme de crochet ou de disque, le dispositif de retenue (12A) étant espacé de la porte (4), notamment du bord avant (4F) de la porte coulissante (4), de telle sorte qu'elle puisse circuler librement entre les positions ouverte et fermée sans entrer en contact avec le dispositif de retenue (12).

6. Agencement (2) selon l'une quelconque des revendications 3 à 5, **caractérisé en ce que** la paroi de fond (44) du caisson (43) de la porte coulissante (4) s'étend en vis-à-vis d'un bord extérieur (6BE) du pied milieu (6B) quelle que soit la position de la porte coulissante.

7. Agencement (2) selon la revendication précédente, **caractérisé en ce que** le dispositif de retenue (12, 12B) comprend un doigt (13) transversalement saillant hors du côté (3) de caisse (6) du véhicule, ledit doigt (13) comportant une tige principale s'étendant transversalement et longitudinalement au véhicule, dont une extrémité libre (14) d'orientation longitudinale comprend une tête (15), notamment en forme de crochet ou de disque.

8. Agencement (2) selon l'une des revendications précédentes en combinaison avec les revendications 2 et 5, **caractérisé en ce que** ledit doigt (13) comporte une platine de fixation (20) au côté (3) de caisse (6), notamment une platine de fixation (20) vissée sur la face arrière (6AR) du pied avant (6A) ou sur la face avant (6BF) du pied milieu (6B).

9. Agencement (2) selon la revendication précédente, **caractérisé en ce que** le dispositif de retenue (12, 12A, 12B) est destiné à venir en contact avec la porte coulissante (4) afin de la maintenir en position fermée sur le côté (3) de caisse (6) lors d'un choc latéral.

10. Agencement (2) selon la revendication précédente, **caractérisé en ce que** le dispositif de retenue (10) est espacé de la porte coulissante (4), notamment espacé des bords de l'ouverture longitudinale (40) et/ou d'un passage (46) ménagé au niveau d'une paroi transversale (41, 42), le dispositif de retenue (10) étant destinée à venir en relation mécanique contre la porte en position fermée lors d'un choc, notamment contre la paroi transversale (41, 42) du caisson (43), la paroi étant notamment une pièce de renfort rapportée sur contre la paroi de fond (44) du caisson (43).

11. Agencement (2) selon l'une quelconque des revendications précédentes, **caractérisé en ce qu'**il comprend un élément déformable de masquage (60) dudit logement longitudinal (40), notamment un élément du type d'un joint à lèvres, traversé par le dispositif de retenue (12, 12B) de manière à écarter notamment les lèvres.

12. Véhicule automobile, **caractérisé en ce qu'**il comprend un agencement (2) selon l'une quelconque des revendications 1 à 11.

## Patentansprüche

1. Anordnung (2) eines Kraftfahrzeugs, insbesondere einer Seite (3) des Fahrzeugs, umfassend eine Aufbau (6) und eine Schiebetür (4) mit Einbaukasten, insbesondere mit äußerem Einbaukasten, wobei die Schiebetür (4) dazu konfiguriert ist, geradlinig entlang einer Seite (3) der Aufbau zwischen einer geschlossenen Position, in der die Schiebetür (4) einen Zugang zum Inneren eines Fahrgastraums (8) und/oder eines Ladebereichs des Fahrzeugs verschließt, und einer offenen Position, in der die Schiebetür (4) den Zugang zum Inneren des genannten Fahrgastraums (8) und/oder des genannten Ladebereichs des Fahrzeugs freigibt, verschoben zu werden, wobei die Anordnung (2) **dadurch gekennzeichnet ist, dass** die Schiebetür (4) eine longitudinale geradlinige Öffnung (40), insbesondere vom Typ einer Ausnehmung oder einer Nut, umfasst, die in der Schiebetür, insbesondere im Bereich einer Grundwand (44) eines Kastens (43) der Schiebetür, ausgespart ist, und dass die Anordnung mindestens eine Rückhaltevorrichtung (10) umfasst, die dazu bestimmt ist, die genannte Schiebetür (4) in ihrer geschlossenen Position zu halten, insbesondere im Fall eines seitlich gegen die Schiebetür (4) ausgeübten Stoßes, insbesondere von innen zum außen bezüglich des Fahrzeugs, wobei die Rückhaltevorrichtung (10) dazu bestimmt ist, sich beim Gleiten der Tür frei im Inneren der longitudinalen geradlinigen Öffnung (40) zu bewegen.

2. Anordnung (2) nach dem vorhergehenden Anspruch, **dadurch gekennzeichnet, dass** die Rückhaltevorrichtung (12A) an einer A-Säule (6A) einer Seite (3) der Aufbau (6) befestigt ist, insbesondere im Bereich eines hinteren Rands (6AR) einer A-Säule (6A), der dazu bestimmt ist, einem vorderen Rand (4F) der Schiebetür (4) in geschlossener Position gegenüberliegend angeordnet zu sein.

3. Anordnung (2) nach Anspruch 1 oder 2, **dadurch gekennzeichnet, dass** die Rückhaltevorrichtung (12, 12B) an einer B-Säule (6B) einer Seite (3) der Aufbau (6) befestigt ist, insbesondere im Bereich eines vorderen Rands (6BF) der B-Säule, der sich im Wesentlichen senkrecht, insbesondere quer, zu der Innenwand (43) der Schiebetür (4) erstreckt.

4. Anordnung (2) nach Anspruch 2 oder 3, **dadurch gekennzeichnet, dass** die Schiebetür (4), insbesondere eine Außenwand (45) der vorderen Tür (4), in geschlossener Position mit der A-Säule (6A), insbesondere mit einer Außenwand (6AE) der A-Säule (6A), bündig ist.

5. Anordnung (2) nach dem vorhergehenden Anspruch, **dadurch gekennzeichnet, dass** die Rückhaltevorrichtung (12A) einen Finger (13) umfasst, der aus der Seite (3) des Ausbaus(6) des Fahrzeugs, insbesondere aus dem hinteren Rand (6AR) der A-Säule (6A), herausragt, wobei der genannte Finger (13) einen Hauptschaft aufweist, der sich longitudinal zum Fahrzeug erstreckt, dessen freies Ende (14) einen Kopf umfasst, insbesondere in Form eines Hakens oder einer Scheibe, wobei die Rückhaltevorrichtung (12A) von der Tür (4), insbesondere von dem vorderen Rand (4F) der Schiebetür (4), derart beabstandet ist, dass sie zwischen den offenen und geschlossenen Positionen sich frei bewegen kann, ohne mit der Rückhaltevorrichtung (12) in Kontakt zu treten.

6. Anordnung (2) nach einem der Ansprüche 3 bis 5, **dadurch gekennzeichnet, dass** sich die Grundwand (44) des Kastens (43) der Schiebetür (4) gegenüber einem Außenrand (6BE) der B-Säule (6B) erstreckt, unabhängig von der Position der Schiebetür.

7. Anordnung (2) nach dem vorhergehenden Anspruch, **dadurch gekennzeichnet, dass** die Rückhaltevorrichtung (12, 12B) einen Finger (13) umfasst, der quer aus der Seite (3) der Aufbau (6) des Fahrzeugs herausragt, wobei der genannte Finger (13) einen Hauptschaft aufweist, der sich quer und longitudinal zum Fahrzeug erstreckt, dessen freies Ende (14) mit longitudinaler Ausrichtung einen Kopf (15) umfasst, insbesondere in Form eines Hakens oder einer Scheibe.

8. Anordnung (2) nach einem der vorhergehenden Ansprüche in Kombination mit den Ansprüchen 2 und 5, **dadurch gekennzeichnet, dass** der genannte Finger (13) eine Befestigungsplatte (20) an der Seite (3) der Aufbau (6) aufweist, insbesondere eine Befestigungsplatte (20), die an der hinteren Fläche (6AR) der A-Säule (6A) oder an der vorderen Fläche (6BF) der B-Säule (6B) verschraubt ist.

9. Anordnung (2) nach dem vorhergehenden Anspruch, **dadurch gekennzeichnet, dass** die Rückhaltevorrichtung (12, 12A, 12B) dazu bestimmt ist, mit der Schiebetür (4) in Kontakt zu kommen, um sie bei einem Seitenaufprall in geschlossener Position an der Seite (3) der Aufbau (6) zu halten.

10. Anordnung (2) nach dem vorhergehenden Anspruch, **dadurch gekennzeichnet, dass** die Rückhaltevorrichtung (10) von der Schiebetür (4) beabstandet ist, insbesondere von den Rändern der longitudinalen Öffnung (40) und/oder von einem Durchgang (46) beabstandet ist, der im Bereich einer Querwand (41, 42) ausgespart ist, wobei die Rückhaltevorrichtung (10) dazu bestimmt ist, bei einem Stoß in geschlossener Position in mechanische Beziehung gegen die Tür zu kommen, insbesondere gegen die Querwand (41, 42) des Kastens(43), wobei die Wand insbesondere ein Verstärkungsteil ist, das an der Grundwand (44) des Kastens (43) angebracht ist.

11. Anordnung (2) nach einem der vorhergehenden Ansprüche, **dadurch gekennzeichnet, dass** sie ein verformbares Element zum Maskieren (60) des genannten longitudinalen Gehäuses (40) umfasst, insbesondere ein Element vom Typ einer Lippendichtung, das von der Rückhaltevorrichtung (12, 12B) durchquert wird, um insbesondere die Lippen auseinanderzuspreizen.

12. Kraftfahrzeug, **dadurch gekennzeichnet, dass** es eine Anordnung (2) nach einem der Ansprüche 1 bis 11 umfasst.

## Claims

1. An arrangement (2) of a motor vehicle, in particular of one side (3) of the vehicle, including a body (6) and a partition sliding door (4), in particular an outer partition, the sliding door (4) being configured to be displaced rectilinearly along a body side (3), between a closed position wherein the sliding door (4) closes the access to the inside of a passenger compartment (8) and/or of a loading zone of the vehicle, and an open position wherein the sliding door (4) gives free access to the inside of the passenger compartment (8) and/or to said loading zone of the vehicle, the arrangement (2) being **characterized in that** the sliding door (4) comprises a longitudinal rectilinear opening (40), in particular such as kerf or a groove, provided in the sliding door, in particular at a bottom wall (44) of a casing (43) of the sliding door, and **in that** the arrangement comprises at least a restraint device (10) intended to hold said sliding door (4) in the closed position thereof, in particular in the event of an impact exerted laterally against the sliding door (4), in particular from the inside toward the outside of the vehicle, the restraint device (10) being intended to move freely inside the longitudinal rectilinear opening (40) during the sliding of the door.

2. The arrangement (2) according to the preceding claim, **characterized in that** the restraint device (12A) is fastened to a front pillar (6A) of a side (3) of the body (6), in particular at the rear edge (6AR) of a front pillar (6A) intended to be arranged opposite a front edge (4F) of the sliding door (4) in the closed position.

3. The arrangement (2) according to claim 1 or 2, **characterized in that** the restraint device (12, 12B) is fastened to a middle pillar (6B) on a side (3) of the body (6), in particular at a front edge (6BF) of the middle pillar extending substantially perpendicularly, in particular transversely, to the inner wall (43) of the sliding door (4).

4. The arrangement (2) according to claim 2 or 3, **characterized in that** the sliding door (4), in particular an outer wall (45) of the front door (4), in the closed position is flush with the front pillar (6A), in particular with an outer wall (6AE) of the front pillar (6A).

5. The arrangement (2) according to the preceding claim, **characterized in that** the restraint device (12A) comprises a finger (13) protruding from the side (3) of the body (6) of the vehicle, in particular from the rear edge (6AR) of the front pillar (6A), said finger (13) including a main rod extending longitudinally to the vehicle, a free end (14) of which comprises a head, in particular in the shape of a hook or a disc, the restraint device (12A) being spaced apart from the door (4), in particular from the front edge (4F) of the sliding door (4), in such a way that same can move freely between the closed and open positions without coming into contact with the restraint device (12).

6. The arrangement (2) according to any of claims 3 to 5, **characterized in that** the bottom wall (44) of the casing (43) of the sliding door (4) extends opposite an outer edge (6BE) of the middle pillar (6B) whatever the position of the sliding door.

7. The arrangement (2) according to the preceding claim, **characterized in that** the restraint device (12, 12B) comprises a finger (13) protruding transversely from the side (3) of the body (6) of the vehicle, said finger (13) including a main rod extending transversely and longitudinally to the vehicle, a longitudinally oriented free end (14) of which comprises a head (15), in particular in the shape of a hook or a disk.

8. The arrangement (2) according to one of the preceding claims in combination with claims 2 and 5, **characterized in that** the said finger (13) includes a fastening plate (20) for fastening to the side (3) of the body (6), in particular a fastening plate (20) screwed onto the rear face (6AR) of the front pillar (6A) or onto the front face (6BF) of the middle pillar (6B).

9. The arrangement (2) according to the preceding claim, **characterized in that** the restraint device (12, 12A, 12B) is intended to come into contact with the sliding door (4) in order to hold same in the closed position on the side (3) of the body (6) in the event of a lateral impact.

10. The arrangement (2) according to the preceding claim, **characterized in that** the restraint device (10) is spaced apart from the sliding door (4), in particular spaced apart from the edges of the longitudinal opening (40) and/or from a passage (46) provided at the transverse wall (41, 42), the restraint device (10) being intended to come into mechanical relation against the door in the closed position during an impact, in particular against the transverse wall (41, 42) of the casing (43), the wall being a reinforcement part directly mounted on the bottom wall (44) of the casing (43).

11. The arrangement (2) according to any of the preceding claims, **characterized in that** same comprises a deformable masking element (60) for said longitudinal housing (40), in particular an element such as a lip seal letting through the restraint device (12, 12B) so as to separate the lips in particular.

12. A motor vehicle, **characterized in that** same comprises an arrangement (2) according to any of claims 1 to 11.
